(19) Europäisches Patentamt
European Patent Office
Office européen des brevets

(11) **EP 2 388 635 A1**

(12) **EUROPEAN PATENT APPLICATION**

(43) Date of publication:
**23.11.2011 Bulletin 2011/47**

(51) Int Cl.:
***G02B 21/00*** (2006.01)      ***G01B 11/24*** (2006.01)

(21) Application number: **11164423.3**

(22) Date of filing: **02.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.05.2010 US 783492**

(71) Applicant: **Mitutoyo Corporation**
**Kawasaki-shi**
**Kanagawa 213-0012 (JP)**

(72) Inventor: **Xie, Yong**
**Remond, Washington 98053 (US)**

(74) Representative: **MERH-IP**
**Matias Erny Reichl Hoffmann**
**Paul-Heyse-Strasse 29**
**80336 München (DE)**

(54) **Chromatic confocal point sensor aperture configuration**

(57)      A central ray blocking aperture element 208 is utilized in a chromatic confocal point sensor optical pen 120 for chromatic range sensing. The central ray blocking aperture element 208 blocks light which would otherwise pass through the chromatic confocal point sensor optical pen 120 proximate to its optical axis OA. The average numerical aperture of the operative light rays of the optical pen 120 is thereby increased, which decreases the width of a corresponding spectral peak that the optical pen 120 provides in the spectrometer of a chromatic confocal point sensor system and thereby improves the overall measurement resolution.

*Fig.1.*

**Description**

FIELD OF THE INVENTION

The invention relates generally to precision measurement instruments, and more particularly to a chromatic sensor lens configuration such as may be utilized in an optical pen for chromatic confocal range sensing.

BACKGROUND OF THE INVENTION

Controlled chromatic aberration techniques may be utilized for distance-sensing metrology applications. As described in "Pseudocolor Effects of Longitudinal Chromatic Aberration," G. Molesini and S. Quercioli, J. Optics (Paris), 1986, Volume 17, No. 6, pages 279-282, controlled longitudinal chromatic aberration (also referred to herein as axial chromatic dispersion) may be introduced in an optical imaging system, causing the imaging system focal length to vary with wavelength, which provides means for optical metrology. In particular, a lens can be designed whose back focal length (BFL) is a monotonic function of wavelength. In white light operation, such a lens exhibits a rainbow of axially dispersed foci that can be used as a spectral probe for distance-sensing applications.

As a further example, U.S. Patent No. 7,477,401, which is hereby incorporated herein by reference in its entirety, discloses that an optical element having axial chromatic aberration, also referred to as axial or longitudinal chromatic dispersion, may be used to focus a broadband light source such that the axial distance to the focus varies with the wavelength. Thus, only one wavelength will be precisely focused on a surface, and the axial distance or height of the surface determines which wavelength is best focused. Upon reflection from the surface, the light is refocused onto a small detector aperture, such as a pinhole and/or the end of an optical fiber. Upon reflection from a surface, only the wavelength that is well-focused on the surface is well-focused on the pinhole and/or fiber. All of the other wavelengths are poorly focused on the fiber, and so will not couple much power into the fiber. Therefore, the signal level will be greatest for the wavelength corresponding to the height of the object. A spectrometer at the detector measures the signal level for each wavelength, which effectively indicates the height of the object.

Certain manufacturers refer to a practical and compact optical assembly that is suitable for chromatic confocal ranging in an industrial setting as a chromatic confocal point sensor and/or as an "optical pen." One example of optical pen instruments that measure Z height are those manufactured by STIL, S.A. of Aix-en-Provence, France (STIL S.A.). As a specific example, the STIL optical pen model number OP 300NL measures Z heights and has a 300 micron range.

Another configuration for a chromatic confocal point sensor is described in commonly assigned U.S. Patent No. 7,626,705 (the '705 patent) which is hereby incorporated herein by reference in its entirety. This patent discloses a lens configuration providing an improved optical throughput and an improved spot size which results in improved measurement resolution in comparison with various commercially available configurations.

In a chromatic confocal point sensor, a distance or height measurement may be based on a spectral profile associated with a surface height measurement, and in particular on precisely identifying the location of a spectral peak (e.g., in a spectrograph) for the peak wavelength corresponding to the height of the object. Measurement resolution is related to the signal to noise ratio (S/N ratio) of the signals or data that are analyzed to determine the spectral peak location. It would be desirable to identify features usable in a chromatic confocal point sensor which improve the signal to noise ratio of the signals that are analyzed to determine the spectral peak location.

SUMMARY OF THE INVENTION

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

It should be appreciated that prior art chromatic confocal point sensor optical pens (optical pens for short) are already sophisticated devices capable of providing resolution at the micron, sub-micron, or even nanometer level. New optical features, or combinations of optical features usable in an optical pen, in order to improve the S/N ratio of the spectral peak signals that it provides, have been rare or nonexistent in recent years.

The present invention is directed to providing an improved optical configuration for a chromatic confocal point sensor optical pen which improves the S/N ratio of spectral peak data that it provides, in order to provide higher resolution chromatic range sensing. Optical pen configurations are disclosed that provide a combination of optical features that economically improve the S/N ratio and/or quality of spectral peak data, for example, as indicated by a full-width half-maximum value characterizing the spectral peak data. In particular, the optical pen configurations disclosed herein include a central ray blocking aperture element which is used to increase the average numerical aperture associated with the operative light (meaning the light which actually contributes to the measurement signals) of an optical pen, without the need to compromise or alter other desirable characteristics of an optical pen. As used herein, the word "light" may refer to both visible and non-visible radiation that contributes to signals in an optical pen.

In various embodiments, a chromatic confocal point sensor optical pen configured as disclosed herein may comprise a housing, a central ray blocking aperture element arranged along an optical axis of the chromatic confocal point sensor optical pen, an in/out optical fiber including a fiber aperture configured to output source light and receive reflected light and a lens configuration arranged along the optical axis of the chromatic confocal point sensor optical pen. The lens configuration is configured to receive the source light and output focused source light to a workpiece surface with axial chromatic dispersion, and receive reflected light from the workpiece surface and focus the reflected light to a point proximate to the fiber aperture. The central ray blocking aperture element comprises a blocking portion arranged along the optical axis and having a minimum blocking portion boundary dimension RMIN relative to the optical axis, and further comprises an open portion arranged at a distance from the optical axis and comprising an open portion inner boundary having a minimum dimension of at least RMIN relative to the optical axis. The blocking portion is configured to block light proximate to the optical axis, and the open portion is configured to transmit light, such that the fiber aperture receives reflected light predominantly from the open portion. Blocking light rays proximate to the optical axis with the blocking portion of the central ray blocking aperture element limits the operative light of the optical pen, which is the light received by the fiber aperture, to come from optical paths through the optical pen that provide a higher value for the average numerical aperture than would be the case if the central rays (e.g., the low numerical aperture rays) were not blocked. A higher value for the average numerical aperture is associated with improved measurement resolution, as described in greater detail below.

In various embodiments, the reflected light preferably defines an operative light radius RMAX which is the minimum radius with respect to the optical axis which includes all of the reflected light at a blocking plane of the central ray blocking aperture element. In some advantageous embodiments, the minimum blocking portion boundary dimension RMIN preferably is at least 30 percent of RMAX. In other embodiments, RMIN may be at least 40 percent of RMAX or at least 50 percent of RMAX, or more. In some embodiments, the open portion inner boundary preferably is circular. In some embodiments, the central ray blocking aperture element preferably comprises an outer masking region surrounding the open portion and defining an open portion outer boundary that bounds all of the reflected light and defines the operative light radius RMAX.

The blocking portion of the central ray blocking aperture element may block all wavelengths of source light and/or reflected light proximate to the optical axis. In some embodiments, the blocking portion may be an opaque element. In some embodiments, the blocking portion may be a partially blocking and partially transmissive element that is either uniformly transmissive in a blocking plane of the central ray blocking aperture element, or in some embodiments, relatively less transmissive proximate to the optical axis and relatively more transmissive at a distance from the optical axis in the blocking plane of the central ray blocking aperture element.

In some embodiments, the central ray blocking aperture element may comprise a transmissive substrate, its blocking portion may comprise a masked region of the transmissive substrate, and the open portion may comprise an unmasked region of the transmissive substrate.

In some embodiments, the central ray blocking aperture element may comprise a metallic substrate, the blocking portion may comprise a suspended region within the metallic substrate (e.g., suspended by bridges or filaments formed in the metallic substrate) and the open portion may comprise holes through the metallic substrate.

In some embodiments, the blocking portion is preferably circular (e.g., as defined by a circular open portion inner boundary) and the open portion is preferably annular.

The central ray blocking aperture element may be located at different positions along the optical axis. In some embodiments, the central ray blocking aperture element may be located between the lens configuration and the in/out optical fiber. In some embodiments, the central ray blocking aperture element may be located in the focused source light output by the lens configuration. In some embodiments, the central ray blocking aperture element may be located within the lens configuration.

BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:

FIGURE 1 is a block diagram of an exemplary chromatic confocal point sensor that may be enhanced by use of a central ray blocking aperture element used according to principles disclosed herein;

FIGURE 2 is a diagram of a schematic side view of an exemplary embodiment of an optical pen configuration illustrating various implementations of a central ray blocking aperture element used according to principles disclosed herein;

FIGURE 3 is a diagram of spectral profile data from a chromatic confocal point sensor illustrating a comparison between spectral peak data from a conventional optical pen and an optical pen that uses a central ray blocking aperture element according to principles disclosed herein; and

FIGURE 4 is a diagram of spectral peak full-width half-maximum values as a function of a central ray blocking aperture element blocking portion dimension, when the central ray blocking aperture element is used in a typical chromatic confocal point sensor according to principles disclosed herein.

DETAILED DESCRIPTION OF THE PREFERRED EMBODIMENT

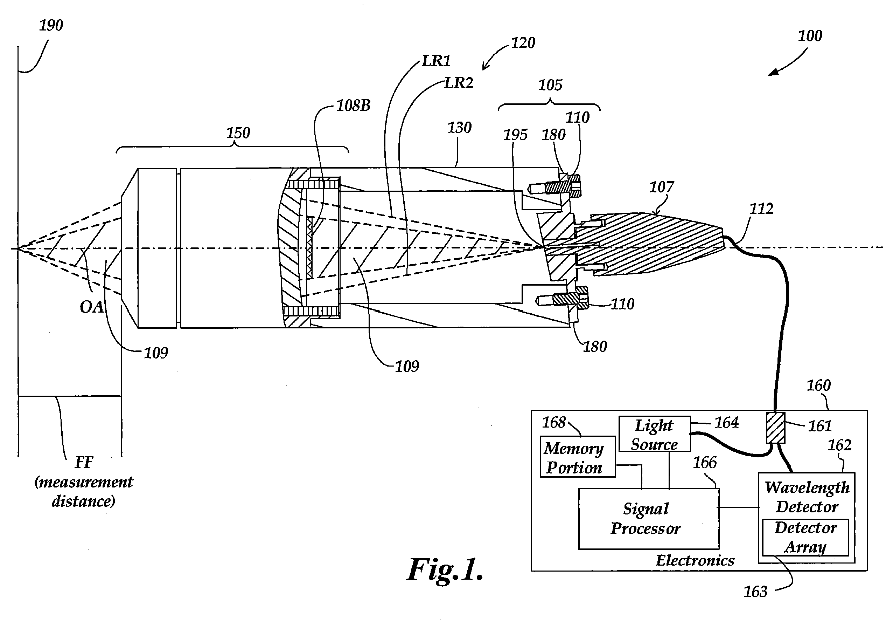

FIGURE 1 is a block diagram of an exemplary chromatic confocal point sensor 100. The chromatic confocal point sensor 100 generally corresponds to analogous sensors described in copending U.S. Patent Application Number 11/940,214 and U.S. Patent Application Number 12/463,936 (the '214 and '936 Applications, respectively), which are hereby incorporated herein by reference in their entirety. As shown in FIGURE 1, the chromatic confocal point sensor 100 includes an optical pen 120 and an electronics portion 160. The optical pen 120 includes an in/out fiber optic sub-assembly 105, a housing 130, and an optics portion 150. The in/out fiber optic sub-assembly 105 includes a mounting element 180 that may be attached to the end of the housing 130 using mounting screws 110. The in/out fiber optic sub-assembly 105 receives an in/out optical fiber (not shown) through a fiber optic cable 112 which encases it and through a fiber optic connector 107. The in/out optical fiber outputs source light through a fiber aperture 195 and receives reflected measurement signal light through the fiber aperture 195. FIGURE 1 also schematically shows a blocking portion 208B of a central ray blocking aperture element arranged along the optical axis OA to block light proximate to the optical axis (e.g., light in the blocked ray region 109) and thereby improve the measurement resolution of the chromatic confocal point sensor 100, as described in greater detail below.

In operation, broadband (e.g., white) source light emitted from the fiber end through the fiber aperture 195 is focused by the optics portion 150, which includes a lens or lenses that provide an axial chromatic dispersion, such that the focal point along the optical axis OA is at different distances depending on the wavelength of the light, as is known for chromatic confocal sensor systems. The source light includes a wavelength that is focused on a workpiece surface 190. Upon reflection from the workpiece surface 190, reflected light is refocused by the optics portion 150 onto the fiber aperture 195. The operative source light and reflected light are bounded by the limiting rays LR1 and LR2. Due to the axial chromatic dispersion, only one wavelength will have a front focus dimension FF that matches the measurement distance from the optical pen 120 to the surface 190. The wavelength that is best focused at the surface 190 will also be the wavelength of the reflected light that is best focused at the fiber aperture 195. The fiber aperture 195 spatially filters the reflected light such that predominantly the best focused wavelength passes through the fiber aperture 195 and into the core of the optical fiber cable 112. As described in more detail below and in the incorporated references, the optical fiber cable 112 routes the reflected signal light to a wavelength detector 162 that is utilized for determining the wavelength having the dominant intensity, which corresponds to the measurement distance to the workpiece surface 190.

The electronics portion 160 includes a fiber coupler 161, the wavelength detector 162, a light source 164, a signal processor 166, and a memory portion 168. In various embodiments, the wavelength detector 162 includes a spectrometer or spectrograph arrangement wherein a dispersive element (e.g., a grating) receives the reflected light through the optical fiber cable 112 and transmits the resulting spectral intensity profile to a detector array 163. The wavelength detector 162 may also include related signal processing (e.g., provided by the signal processor 166, in some embodiments) that removes or compensates certain detector-related error components from the profile data. Thus, certain aspects of the wavelength detector 162 and the signal processor 166 may be merged and/or indistinguishable in some embodiments.

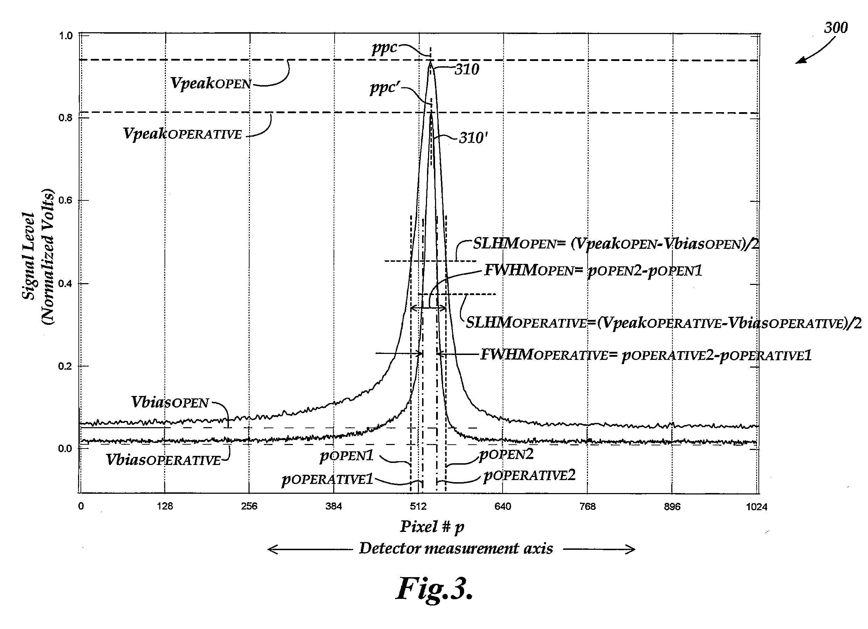

The white light source 164, which is controlled by the signal processor 166, is coupled through the optical coupler 161 (e.g., a 2x1 optical coupler) to the fiber cable 112. As described above, the light travels through the optical pen 120 which produces longitudinal chromatic aberration so that its focal length changes with the wavelength of the light. The wavelength of light that is most efficiently transmitted back through the fiber is the wavelength that is in focus on the surface 190. The reflected wavelength-dependent light intensity then passes through the fiber coupler 161 again so that approximately 50% of the light is directed to the wavelength detector 162, which may receive a spectral intensity profile distributed over an array of pixels along a measuring axis of the detector array 163, and operate to provide corresponding profile data as described in more detail below with respect to FIGURE 3 and in the incorporated references. Briefly, a subpixel-resolution distance-indicating coordinate of the profile data (e.g., a peak position coordinate) is calculated by the signal processor 166, and the distance-indicating coordinate corresponding to the wavelength peak determines the measurement distance to the surface via a distance calibration lookup table which is stored in the memory portion 168. The distance-indicating coordinate may be determined by various methods such as determining the centroid of profile data included in a peak region of the profile data.

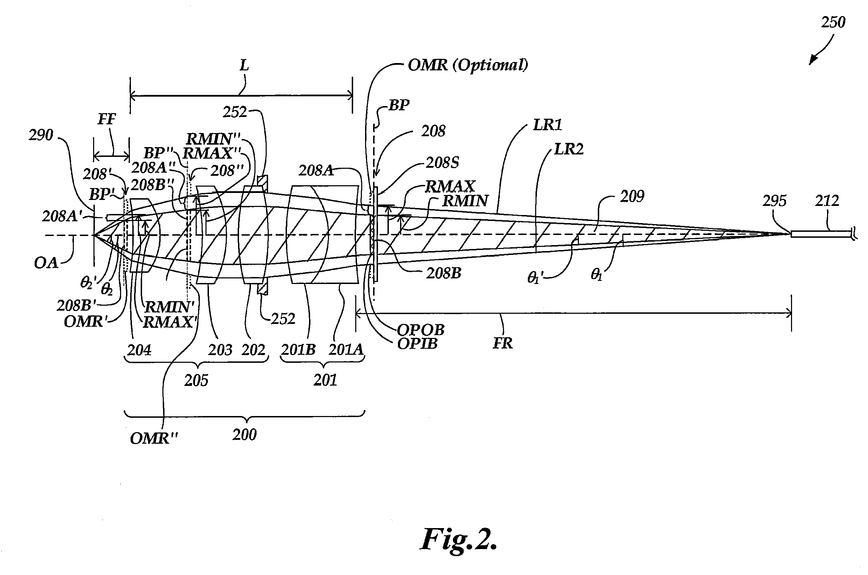

FIGURE 2 is a diagram of a schematic side view of an exemplary embodiment of an optical pen configuration 250 illustrating various implementations of a central ray blocking aperture element 208 (or 208', or 208") used according to principles disclosed herein. The optical pen configuration 250 includes a lens configuration 200, the central ray blocking aperture element 208 (or 208', or 208"), and an in/out optical fiber 212 having a fiber aperture 295. In the embodiment shown in FIGURE 2, the lens configuration 200 includes a doublet lens element 201 and a positive power lens portion 205. In various embodiments, the positive power lens portion comprises at least two lens elements. In some embodiments, the positive power lens portion comprises at most four lens elements. In the specific embodiment shown in FIGURE 2, the positive power lens portion 205 includes a bi-convex lens element 202 and meniscus lens elements 203 and 204. The doublet lens element 201 is formed from a first lens portion 201A and second lens portion 201B. The meniscus lens elements 203 and 204 have both surfaces curved in the same direction and are oriented so as to provide positive optical power and focus the light output from the lens configuration 200 approximately as shown in FIGURE 2. In the configuration illustrated in FIGURE 2, the spherical aberration of the positive power lens portion 105 may be more easily controlled or configured by splitting the focusing lens operations into the three air spaced singlet lenses 202-204.

The central ray blocking aperture element 208 comprises a blocking portion 208B, arranged along the optical axis OA, and an open portion 208A arranged at a distance from the optical axis OA. The blocking portion 208B has a minimum blocking portion boundary dimension RMIN relative to the optical axis, and the open portion 208A comprises an open portion inner boundary OPIB (which is also the boundary of the blocking portion 208B) that be spaced at the dimension RMIN relative to the optical axis OA along at least a portion of its boundary. However, the open portion inner boundary OPIB may be spaced at a larger dimension relative to the optical axis OA along other portions of the boundary, depending on its shape (e.g., if it is not a circular boundary).

During operation, source light from the in/out optical fiber 212 is output from the fiber aperture 295 that is fixed relative to the lens configuration 200 to provide source light along the optical axis OA. In one embodiment, the end of the core of the in/out optical fiber 212 may provide the fiber aperture 295. The source light is directed toward the lens configuration 200 and the central ray blocking aperture element 208 (shown at three alternative locations along the optical axis OA in FIGURE 2, as described below). The blocking portion 208B of the central ray blocking aperture element 208 blocks light rays proximate to the optical axis OA (e.g., in the blocked ray region 209), and its open portion 208A transmits the remaining unblocked light rays (e.g., including the operative light rays between the limiting rays LR1 and LR2) which are focused on the workpiece surface 290 by the lens configuration 200. In various advantages embodiments, the blocking portion 208B of the central ray blocking aperture element 208 blocks all wavelengths of light proximate to the optical axis OA. The reflected light from the workpiece surface 290 passes back through the central ray blocking aperture element 208 and is refocused by the lens configuration 200 onto a point proximate to the fiber aperture 295. Any light rays in the blocked region 209 are blocked by the blocking portion 208B, and any light rays between the blocked region 209 and the limiting operative rays LR1 and LR2 are transmitted by the open portion 208A as operative light rays. A distance FR represents the spacing between the back of the lens configuration 200 and the fiber aperture 295.

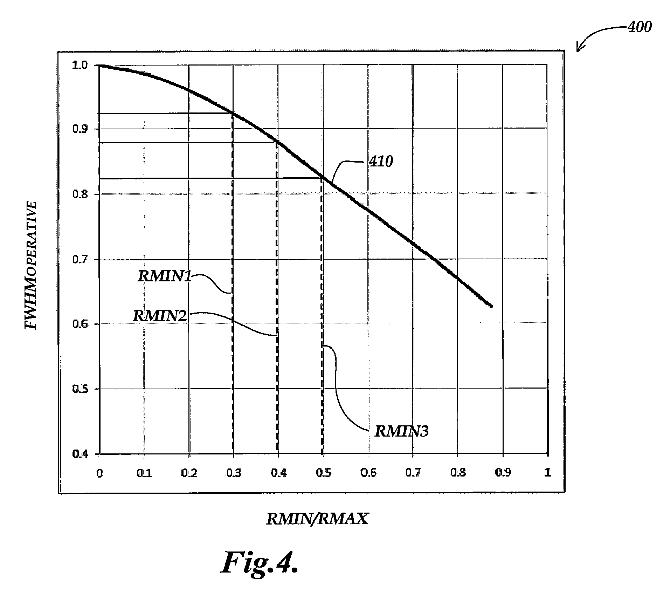

According to a convention used herein, the operative reflected light defines an operative light radius RMAX, which is the minimum radius with respect to the optical axis OA which includes all of the operative reflected light at a blocking plane BP of the central ray blocking aperture element 208. In some embodiments, in order to improve the measurement resolution provided by an optical pen according to principles described in greater detail below, the minimum blocking portion boundary dimension RMIN may be at least 30% of the operative light radius RMAX. In other embodiments, the minimum blocking portion boundary dimension RMIN may be at least 40% of the operative light radius RMAX. In other embodiments, the minimum blocking portion boundary dimension RMIN may be at least 50% of the operative light radius RMAX, or more. The effects of the relative size of the minimum blocking portion boundary dimension RMIN with respect to the operative light radius RMAX are discussed in greater detail below, with reference to FIGURE 4. In various advantageous embodiments, the open portion inner boundary OPIB (and the blocking portion 208B) may be circular. However, in other embodiments it may be any other desired shape such as octagonal or square, or irregular. Thus, the open portion 208A may be annular in some embodiments, or may have an irregular shaped and/or irregular radial width in various other embodiments.

It should be appreciated, that various implementations of the central ray blocking aperture element 208 may be utilized in various embodiments of the chromatic confocal point sensor 100. For example, in some embodiments, the central ray blocking aperture element 208 may comprise an optional outer masking region OMR (shown in dashed outline in FIGURE 2) surrounding the open portion 208A and defining an open portion outer boundary OPOB that bounds all of the operative reflected light and defines the operative light radius RMAX. However, in other embodiments, the outer masking region OMR may be omitted and a portion of the housing or the like (e.g., the portion 252, shown in FIGURE 2) may provide a similar function in that it may bound all of the operative reflected light, which in effect defines the operative light radius RMAX defined at the blocking plane BP of the central ray blocking aperture element 208. In some embodiments, the blocking portion is an opaque element. In other alternative embodiments, the blocking portion is a partially blocking and partially transmissive element, for example it may be either uniformly transmissive in the blocking plane BP of the central ray blocking aperture element 208 in some embodiments, or in other embodiments it may be relatively less transmissive proximate to the optical axis OA and relatively more transmissive at a distance from the optical axis OA in the blocking plane BP of the central ray blocking aperture element 208. In some embodiments, such as that shown in FIGURE 2, the central ray blocking aperture element 208 may comprise a transmissive substrate 208S, the blocking portion 208B comprises a masked region of the transmissive substrate 208S and the open portion 208A may comprise an unmasked region of the transmissive substrate 208S. In other embodiments, the central ray blocking aperture element 208 may comprise a metallic substrate, the blocking portion 208B may comprise a region suspended within the metallic substrate (e.g., by bridges or filaments form the metallic substrate), and the open portion 208A may comprise holes through the metallic substrate.

It should be appreciated that the central ray blocking aperture element may be located at various alternative positions along the optical axis OA. For example, in one embodiment, the central ray blocking aperture element 208 is located between the lens configuration 200 and the fiber aperture 295 as shown by the exemplary instance of the central ray blocking aperture element 208 in FIGURE 2. In alternative embodiments, the central ray blocking aperture element may be located in the focused source light output by the lens configuration 200, as shown by the exemplary instance of the central ray blocking aperture element 208' in FIGURE 2, or within the lens configuration 200, as shown by the exemplary instance of the central ray blocking aperture element 208" in FIGURE 2. It will be understood that the alternative central ray blocking aperture elements 208' and 208" may be constructed in any of the forms previously described for the central ray blocking aperture element 208, and the various "primed" features of the elements 208' and 208" (e.g., 208B', 208A', BP', RMIN', RMAX', OMR', etc.) may be understood by analogy with the similarly numbered "unprimed" features of the element 208 outlined above.

FIGURE 2 shows the rear and front convergence/divergence angles $\theta_1$ and $\theta_2$, respectively, associated with the limiting light rays L1 and L2 of the operative light of the configuration 250, and the rear and front focus dimensions FR and FF. It will be appreciated that the rear and front focus dimensions FR and FF, will generally depend on the wavelength of light, due to the axial chromatic dispersion provided by the lens configuration 200. The maximum unblocked or open rear numerical aperture *NArearMAXOPEN* is defined as:

$$NArear_{MAXOPEN} = sin\theta 1 \qquad (Eq.\ 1)$$

In addition, the maximum unblocked or open front numerical aperture *NAMAXOPEN* is defined as:

$$NA_{MAXOPEN} = sin\theta_2 \qquad (Eq.\ 2)$$

The portion of light within an angle $\theta_2'$ is effectively blocked by the blocking portion 208B of the central ray blocking aperture element 208 (or 208B' of 208', etc.). The blocked front numerical aperture $NA_{BLOCK}$ is defined as:

$$NA_{BLOCK} = sin\theta_2' \qquad (Eq.\ 3)$$

Based on the foregoing, the rays of the source light which are transmitted by open portion 208A of the central ray blocking aperture element 208 (or 208A' of 208', etc.) may therefore be understood to have an effective "light ray averaged" front numerical aperture *NAOPERATIVE* such that:

$$NA_{BLOCK} \ < \ NA_{OPERATIVE} \ < \ NA_{MAXOPEN} \qquad (Eq.\ 4)$$

It should be appreciated that due to the operation of the central ray blocking aperture 208 (or 208A' of 208', etc.) the operative rays of the optical pen configuration 250 therefore have a higher average numerical aperture than would be the case in the absence of the central ray blocking aperture 208. This results in improved workpiece surface position measurement resolution in a chromatic confocal point sensor, as will be discussed in more detail below. It should be appreciated that other desirable features of the optical pen configuration 250 need not be altered or compromised in order to achieve this improved measurement resolution.

The operation of a central ray blocking aperture according to principles disclosed herein may be understood to eliminate central light rays which operate at corresponding lower numerical apertures. A lower numerical aperture may generally be associated with a greater focal depth (e.g., the focal depth associated with a light ray having a corresponding numerical aperture may be qualitatively understood to be related to the known conventional relationship where the depth of field of a lens is inversely proportional to the square of its numerical aperture). It should be understood that a greater focal depth for an operative wavelength in a chromatic ranging system means that it provides less signal variation per unit of measurement surface displacement. As an extreme example, a ray following the optical axis OA (numerical aperture of zero) has an "infinite" focal depth and is nominally totally insensitive to the measurement distance. That is, a light ray along the optical axis OA in an optical pen always returns to the detector regardless of the measurement distance. Thus, all wavelengths of light rays along the optical axis can be considered as detrimental to the S/N ratio associated with profile data in a chromatic confocal point sensor, since they contribute no signal variation per unit of measurement surface displacement, and thus contribute a meaningless background signal component that can be regarded as a noise component.

Similarly, other low numerical aperture light rays that travel close to the optical axis OA provide low signal variation per unit of measurement surface displacement. This means that a relatively wide range of wavelengths included in low numerical aperture light rays that travel close to the optical axis OA will be reflected from a workpiece surface and detected with similar signal strength. Thus, such low numerical aperture light rays that travel close to the optical axis OA will contribute to broaden the spectral peak in the spectral profile data of a workpiece surface measurement (e.g., the peak region will have a relatively wider full-width half-maximum value, as described below with reference to the profile data 310 in FIGURE 3). Conversely, eliminating such low numerical aperture light rays that travel close to the optical axis OA by using a central ray blocking aperture according to principles disclosed herein advantageously contributes to reducing the width of the spectral peak in the spectral profile data of a workpiece surface measurement (e.g. the peak region will have a relatively narrow full-width half-maximum value, as described below with reference to the profile data 310' in FIGURE 3).

FIGURE 3 is a diagram 300 of spectral profile data 310 and spectral profile data 310' from a chromatic confocal point sensor illustrating the comparison between spectral peak data from a conventional optical pen and an optical pen that uses a central ray blocking aperture element according to principles disclosed herein. Spectral data such as that shown in FIGURE 3 is generally understood in the art, for example, as described in the incorporated references, therefore, need not be described in detail here. Briefly, the profile data 310 and the profile data 310' each show a signal level associated with each pixel p (in normalized volts). The profile data 310 corresponds to measurements operations performed with a chromatic confocal point sensor (e.g., analogous to the chromatic confocal point sensor 100 shown in FIGURE 1) without using a central ray blocking aperture element (e.g., with $NA_{OPERATIVE} = NA_{OPEN}$). In contrast, the profile data 310' corresponds to measurements operations performed with a chromatic confocal point sensor which includes a central ray blocking aperture element 208 (e.g., with $NA_{OPERATIVE}$ according to EQUATION 4).

The profile data 310 and the profile data 310' exhibit spectral peaks having peak position coordinates ppc and ppc' respectively. The peak position coordinates ppc and ppc' may be determined with sub pixel resolution based on determining the peak of a curve fit to the peak regions of the profile data 310 and profile data 310', or based on the centroid of peak regions of the profile data 310 and profile data 310', or various other calibration and signal processing methods (e.g., as described in the incorporated references). As previously discussed with respect to FIGURE 1, the measurement distance "Z" may be determined as the measurement distance that corresponds to the value of the peak position coordinate in the stored distance calibration data. In various embodiments, the stored distance calibration data may be interpolated to give a measurement distance precisely corresponding to the sub pixel peak position coordinate.

It will be appreciated based on the foregoing discussion that the accuracy and measurement resolution of an optical pen is related to the uncertainty associated with determining the peak position coordinate ppc or ppc' or the like. For a given amount of signal noise, this uncertainty is in turn related to the steepness and narrowness of the data curve formed in the peak region of the profile data. That is, a narrower peak with steeper sides provides a corresponding peak position coordinate with less uncertainty and better resolution.

The narrowness of the peak region may be characterized by its full-width half-maximum value. As shown in FIGURE 3, the maximum value of the peak of the profile data 310 corresponding to a conventional optical pen is *VpeakOPEN* and its base is at *VbiasOPEN*. Accordingly, its half-maximum signal value *SLHMOPEN* is:

$$SLHM_{OPEN} = (Vpeak_{OPEN} - Vbias_{OPEN})/2 \qquad \text{(Eq. 5)}$$

In the profile data 310, the pixels on opposite sides of the peak region that have signal values most closely corresponding to the half-maximum signal value $SLHM_{OPEN}$ are designated *pOPEN1* and *pOPEN2*. Accordingly, the full-width half-maximum value $FWHM_{OPEN}$ characterizing the width of the peak region of the profile data 310 is:

$$FWHM_{OPEN}= p_{OPEN}2 - p_{OPEN}1 \qquad\qquad (Eq.\ 6)$$

By analogy with the foregoing, it will be understood that the signal value of the half-maximum $SLHM_{OPERATIVE}$ of the profile data 310' corresponding to an optical pen that uses a central ray blocking aperture element according to principles disclosed herein is:

$$SLHM_{OPERATIVE}= (Vpeak_{OPERATIVE} - Vbias_{OPERATIVE})/2 \qquad\qquad (Eq.\ 7)$$

and the full-width half-maximum value $FWHM_{OPERATIVE}$ characterizing the width of the peak region of the profile data 310' is:

$$FWHM_{OPERATIVE}= p_{OPERATIVE}2 - p_{OPERATIVE}1 \qquad\qquad (Eq.\ 8)$$

FIGURE 4 is a diagram 400 that shows the behavior of a curve 410 of normalized spectral peak full-width half-maximum values (e.g., as defined by EQUATION 8, but normalized in the diagram 400) as a function of the ratio of RMIN/RMAX, where RMIN is the radius of a circular blocking portion of a central ray blocking aperture element and RMAX is the minimum radius which includes all of the reflected light at a blocking plane of the central ray blocking aperture element, as previously outlined herein, for a central ray blocking aperture element used in a typical chromatic confocal point sensor according to principles disclosed herein. In this example, the typical chromatic confocal point sensor is characterized by the approximate values FF≈10.7 mm, $NAMAX_{OPEN}$≈.59, and $NArearMAX_{OPEN}$≈.07, with a fiber aperture diameter of approximately 20 microns.

As shown in FIGURE 4, when the blocking portion boundary dimension RMIN=0 (RMIN/RMAX=0), which corresponds to a conventional optical pen with no blocking portion, the normalized value of $FWHM_{OPERATIVE}$ is 1.0, confirming that there is no reduction in $FWHMO_{PERATIVE}$ relative to a convention optical pen in such a case (as expected). It may be observed that the curve 410 is nonlinear. In particular, for values of RMIN/RMAX less than about 0.2, the rate of improvement in $FWHM_{OPEIZATIVE}$ with increasing RMIN is relatively little small. However, for values of RMIN/RMAX greater than about 0.2, the rate of improvement in $FWHM_{OPERATIVE}$ with increasing RMIN increases. Therefore, it may be advantageous in some embodiments if a central ray blocking aperture element is configured such that RMIN is at least 20% of RMAX, or 30% of RMAX, or even 40% or 50% of RMAX, or more. For the example shown in FIGURE 4, when the blocking portion boundary dimension RMIN has a value RMIN1 which is equal to 30% of RMAX, the normalized value of $FWHMO_{PERATIVE}$ is approximately 0.93, indicating that there is approximately a 7% improvement in the spectral peak width compared to a convention optical pen of otherwise similar design. When the minimum blocking portion boundary dimension RMIN has a value of RMIN2 which is equal to 40% of RMAX, the normalized value of $FWHM_{OPERATIVE}$ is approximately 0.87, and when the minimum blocking portion boundary dimension RMIN has a value of RMIN3 which is equal to 50% of RMAX, the normalized value of $FWHM_{OPERATIVE}$ is approximately 0.82, indicating improvements of 13% and 18%, respectively, in the spectral peak width compared to a convention optical pen of otherwise similar design. In practice, one consideration related to the selection of the ratio dimension RMIN, is that as the dimension RMIN is increased relative to RMAX, the amount of operative light reaching the detector may be reduced, reducing the peak height of the resulting profile data. However, this effect may be compensated by increasing the illumination intensity, or increasing the signal integration time of the detector, in a chromatic confocal point sensor.

While the preferred embodiment of the invention has been illustrated and described, numerous variations in the illustrated and described arrangements of features and sequences of operations will be apparent to one skilled in the art based on this disclosure. Thus, it will be appreciated that various changes can be made therein without departing from the spirit and scope of the invention.

**Claims**

1. A chromatic confocal point sensor optical pen operable to provide a signal usable to measure a distance to a surface, the chromatic confocal point sensor optical pen comprising:

   a housing (130);
   a central ray blocking aperture element (208, 208', 208") arranged along an optical axis of the chromatic confocal point sensor optical pen;
   an in/out optical fiber including a fiber aperture (195; 295) configured to output source light and receive reflected light;
   a lens configuration (200) arranged along an optical axis of the chromatic confocal point sensor optical pen, the lens configuration configured to:

      receive the source light and output focused source light to a workpiece surface (190) with axial chromatic dispersion; and
      receive reflected light from the workpiece surface (190) and focus the reflected light to a point proximate to the fiber aperture (195; 295),

   wherein:

      the central ray blocking aperture element (208, 208', 208") comprises a blocking portion (208B) arranged along the optical axis and having a minimum blocking portion boundary dimension RMIN relative to the optical axis, and an open portion (208A) arranged at a distance from the optical axis and comprising an open portion inner boundary having a minimum dimension of at least RMIN relative to the optical axis; and
      the blocking portion (208B) is configured to block light proximate to the optical axis, and the open portion (208A) is configured to transmit light, such that the fiber aperture (195; 295) receives reflected light predominantly from the open portion (208A).

2. The chromatic confocal point sensor optical pen of Claim 1, wherein:

   the reflected light defines an operative light radius RMAX which is the minimum radius with respect to the optical axis which includes all of the reflected light at a blocking plane of the central ray blocking aperture element (208, 208', 208"); and
   RMIN is at least 30 percent of RMAX.

3. The chromatic confocal point sensor optical pen of Claim 2, wherein the open portion inner boundary is circular.

4. The chromatic confocal point sensor optical pen of Claim 2 or 3, wherein the central ray blocking aperture element (208, 208', 208") comprises an outer masking region surrounding the open portion (208A) and defining an open portion outer boundary that bounds all of the reflected light and defines the operative light radius RMAX.

5. The chromatic confocal point sensor optical pen of at least one of Claims 2 to 4, wherein RMIN is at least 40 percent of RMAX.

6. The chromatic confocal point sensor optical pen of at least one of Claims 2 to 4, wherein RMIN is at least 50 percent of RMAX.

7. The chromatic confocal point sensor optical pen of at least one of Claims 1 to 6, wherein the central ray blocking aperture element (208, 208', 208") blocks all wavelengths of reflected light proximate to the optical axis.

8. The chromatic confocal point sensor optical pen of Claim 7, wherein the blocking portion (208B) is an opaque element.

9. The chromatic confocal point sensor optical pen of Claim 7, wherein the blocking portion (208B) is a partially blocking and partially transmissive element that is one of (a) uniformly transmissive in a blocking plane of the central ray blocking aperture element (208, 208', 208"), and (b) relatively less transmissive proximate to the optical axis and relatively more transmissive at a distance from the optical axis in a blocking plane of the central ray blocking aperture element (208, 208', 208").

**10.** The chromatic confocal point sensor optical pen of at least one of Claims 1 to 9, wherein the central ray blocking aperture element (208, 208', 208") comprises a transmissive substrate (208S), the blocking portion (208B) comprises a masked region of the transmissive substrate (208S) and the open portion (208A) comprises an unmasked region of the transmissive substrate (208S).

**11.** The chromatic confocal point sensor optical pen of at least one of Claims 1 to 10, wherein the central ray blocking aperture element (208, 208', 208") is located between the lens configuration (200) and the in/out optical fiber.

**12.** The chromatic confocal point sensor optical pen of at least one of Claims 1 to 10, wherein the central ray blocking aperture element (208, 208', 208") is located in the focused source light output by the lens configuration (200).

**13.** The chromatic confocal point sensor optical pen of at least one of Claims 1 to 10, wherein the central ray blocking aperture element (208, 208', 208") is located within the lens configuration (200).

**14.** The chromatic confocal point sensor optical pen of at least one of Claims 1 to 13, wherein the central ray blocking aperture element (208, 208', 208") comprises a metallic substrate, the blocking portion (208B) comprises a region suspended within the metallic substrate and the open portion (208A) comprises holes through the metallic substrate.

**15.** The chromatic confocal point sensor optical pen of at least one of Claims 1 to 14, wherein the blocking portion (208B) is circular and the open portion (208A) is annular.

*Fig.1.*

*Fig.2.*

EP 2 388 635 A1

*Fig.3.*

EP 2 388 635 A1

*Fig.4.*

Europäisches
Patentamt

European
Patent Office

Office européen
des brevets

# EUROPEAN SEARCH REPORT

Application Number

EP 11 16 4423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 975 554 A1 (MITUTOYO CORP [JP]) 1 October 2008 (2008-10-01) * figures * * paragraph [0017] - paragraph [0041] * ----- | 1-15 | INV. G02B21/00 G01B11/24 |
| Y | EP 2 060 869 A1 (MITUTOYO CORP [JP]) 20 May 2009 (2009-05-20) * figure 1 * * paragraph [0027] - paragraph [0030] * ----- | 1-15 | |
| Y | US 6 545 789 B1 (LEMASTERS JOHN J [US]) 8 April 2003 (2003-04-08) * the whole document * ----- | 1-15 | |
| Y | DE 43 24 681 A1 (HELL STEFAN [DE]) 30 March 1995 (1995-03-30) * abstract * * figures * * column 5, line 42 - column 8, line 9 * ----- | 1 | |
| A | MARTINEZ-CORRAL M ET AL: "Tunable axial superresolution by annular binary filters. Application to confocal microscopy", OPTICS COMMUNICATIONS, NORTH-HOLLAND PUBLISHING CO. AMSTERDAM, NL, vol. 119, no. 5, 15 September 1995 (1995-09-15), pages 491-498, XP004062592, ISSN: 0030-4018, DOI: DOI:10.1016/0030-4018(95)00380-Q * the whole document * ----- | 1-15 | **TECHNICAL FIELDS SEARCHED (IPC)** G01B G02B |

The present search report has been drawn up for all claims

| Place of search | Date of completion of the search | Examiner |
|---|---|---|
| Munich | 3 August 2011 | Windecker, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 388 635 A1**

## ANNEX TO THE EUROPEAN SEARCH REPORT
## ON EUROPEAN PATENT APPLICATION NO.

EP 11 16 4423

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2011

| Patent document cited in search report | | | Publication date | Patent family member(s) | | | Publication date |
|---|---|---|---|---|---|---|---|
| EP 1975554 | A1 | | 01-10-2008 | JP<br>US | 2008256679<br>2008239278 | A<br>A1 | 23-10-2008<br>02-10-2008 |
| EP 2060869 | A1 | | 20-05-2009 | CN<br>JP<br>US | 101435719<br>2009122105<br>2010283989 | A<br>A<br>A1 | 20-05-2009<br>04-06-2009<br>11-11-2010 |
| US 6545789 | B1 | | 08-04-2003 | NONE | | | |
| DE 4324681 | A1 | | 30-03-1995 | NONE | | | |

EPO FORM P0459

For more details about this annex : see Official Journal of the European Patent Office, No. 12/82

16

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7477401 B
- US 7626705 B
- US 940214 A
- US 463936 A

**Non-patent literature cited in the description**

- **G. MOLESINI ; S. QUERCIOLI.** Pseudocolor Effects of Longitudinal Chromatic Aberration. *J. Optics (Paris,* 1986, vol. 17 (6), 279-282